# EUROPEAN PATENT APPLICATION

(11) **EP 4 797 859 A1**
(43) Date of publication of application: **26.08.2026**
(21) Application number: 23956306.7
(22) Date of filing: 23.10.2023
(51) Int. Cl.: H04W 76/10, H04W 4/50

(54) **DATA TRANSMISSION METHOD, COMMUNICATION APPARATUS, AND COMMUNICATION SYSTEM**

(71) Applicant: HUAWEI TECHNOLOGIES CO., LTD., Shenzhen 518129 (CN)
(72) Inventor: WANG, Fei, Shenzhen, Guangdong 518129 (CN); PENG, Chenghui, Shenzhen, Guangdong 518129 (CN); XING, Weijun, Shenzhen, Guangdong 518129 (CN); HUANG, Huanhuan, Shenzhen, Guangdong 518129 (CN)
(74) Representative: Isarpatent
(86) International application number: PCT/CN2023/125980
(87) International publication number: WO 2025/086049

(57) **Abstract**

This application provides a communication method, apparatus, and system. The method may be applied to a terminal device. The method includes: generating uplink data of a first client application; sending a first data packet via a first session, where the first data packet includes the uplink data, the first session is a session between the terminal device and a first node, the first node is configured to load a first server-side application corresponding to the first client application, the first node is a core network element, and the first server-side application is from a third-party system. The first data packet is sent via the first session, so that the uplink data can be transmitted to the first node on which the first server-side application is deployed, without depending on the transmission control protocol TCP address/internet protocol IP address protocol, to reduce transmission overheads.

## Description

### TECHNICAL FIELD

Embodiments of this application relate to the field of wireless communication technologies, and more specifically, to a data transmission method, an apparatus, and a system.

### BACKGROUND

Currently, a terminal device may run more client applications, and each client application may generate data exchanged with a server-side application developed by a third-party system. Generally, the terminal device performs data transmission according to the transmission control protocol/internet protocol (transmission control protocol/internet protocol, TCP/IP) protocol. For example, the terminal device adds a TCP header (header) and an IP header to the front of to-be-sent data. However, the TCP header and the IP header occupy a large quantity of bytes, resulting in high transmission overheads.

### SUMMARY

This application provides a data transmission method, an apparatus, and a system, to reduce transmission overheads.

According to a first aspect, a communication method is provided. The method may be applied to a terminal device, or may be applied to a chip, a chip system, a hardware circuit, a software module, a combination of a hardware circuit and a software module, or the like installed in the terminal device. The following uses the terminal device as an example for description. The method includes: generating uplink data of a first client application; sending a first data packet via a first session, where the first data packet includes the uplink data, the first session is a session between the terminal device and a first node, the first node is configured to load a first server-side application corresponding to the first client application, the first node is a core network element, and the first server-side application is from a third-party system.

Based on this technical solution, the terminal device can determine the first session corresponding to the first client application, and the terminal device may send the uplink data via the first session, so that the uplink data can be transmitted via the first session to the first node on which the first server-side application is deployed, without depending on the TCP/IP address protocol, to reduce transmission overheads.

With reference to the first aspect, in some implementations, there is a first mapping relationship between the first session and the first client application.

For example, the terminal device includes a first function, and the first function is used to serve the first client application. For example, the first function is used to determine the first mapping relationship between the first session and the first client application.

With reference to the first aspect, in some implementations, the first node is configured to load at least one server-side application, the first session is used to carry data of the first server-side application in the at least one server-side application, and the first client application corresponds to the first server-side application.

Based on this technical solution, an independent first session may be established between the first node and the terminal device based on the first server-side application. The terminal device may send, via the first session, the uplink data generated by the first client application. The first node may receive the uplink data via the first session, and transmit the uplink data to the first client application based on the first session, to implement reliable transmission of data packets.

With reference to the first aspect, in some implementations, the first node is configured to load a plurality of server-side applications, the first session is used to carry data of the plurality of server-side applications, and the first client application corresponds to one of the plurality of server-side applications.

Based on this technical solution, a shared first session may be established between the first node and the terminal device, that is, at least one server-side application loaded on the first node may share the first session, and the terminal device may send, via the first session, uplink data generated by a plurality of client applications, to simplify a session establishment procedure.

With reference to the first aspect, in some implementations, the first data packet includes indication information of the first server-side application.

Based on this technical solution, the shared first session may be established between the first node and the terminal device, the first data packet may include the indication information of the first server-side application, and the first node or an access network device that receives the uplink data may manage the indication information of the first server-side application, so that the uplink data is reliably transmitted to a first server-side device, to implement reliable transmission of the data packets.

For example, the indication information may indicate an identifier, an index, a sequence number, or the like of the first server-side application.

With reference to the first aspect, in some implementations, the first data packet does not include at least one of the following: a transmission control protocol TCP address of the first node or an internet protocol IP address of the first node.

According to a second aspect, a data transmission method is provided. The method may be applied to an access network device, or may be applied to a chip, a chip system, a hardware circuit, a software module, a combination of a hardware circuit and a software module, or the like installed in the access network device. The following uses the access network device as an example for description. The method includes: receiving a first data packet via a first session, where the first data packet includes uplink data of a first client application of a terminal device, the first session is a session between the terminal device and a first node, the first node is configured to load a first server-side application corresponding to the first client application, the first node is a core network element, and the first server-side application is from a third-party system; and sending a second data packet via the first session, where the second data packet is generated based on the first data packet.

Some implementations of the second aspect are implementations corresponding to some implementations of the first aspect. For beneficial technical effects of some implementations of the second aspect, refer to the descriptions of related implementations of the first aspect. Details are not described herein again.

With reference to the second aspect, in some implementations, the first node is configured to load at least one server-side application, the first session is used to carry data of the first server-side application in the at least one server-side application, and the first client application corresponds to the first server-side application.

With reference to the second aspect, in some implementations, the first node is configured to load a plurality of server-side applications, the first session is used to carry data of the plurality of server-side applications, and the first client application corresponds to one of the plurality of server-side applications.

With reference to the second aspect, in some implementations, the first data packet includes indication information of the first server-side application, and the second data packet includes the indication information of the first server-side application and the uplink data.

Based on this technical solution, a shared first session may be established between the first node and the terminal device, the first data packet sent by the terminal device may carry the indication information of the first server-side application, the first node may manage the indication information of the first server-side application, and the access network device may not need to parse the indication information of the first server-side application, to simplify processing complexity of the access network device.

With reference to the second aspect, in some implementations, the first data packet includes the indication information of the first server-side application, the second data packet includes port information of the first server-side application and the uplink data, and there is a second mapping relationship between the port information of the first server-side application and the indication information of the first server-side application.

Based on this technical solution, the shared first session may be established between the first node and the terminal device, the first data packet sent by the terminal device may carry the indication information of the first server-side application, the access network device may obtain the second mapping relationship between the indication information of the first server-side application and port information of the first server-side application, and the access network device may route the uplink data based on the second mapping relationship, so that the uplink data is transmitted to the first server-side application for processing, to implement reliable transmission of data packets.

With reference to the second aspect, in some implementations, the method further includes: receiving information indicating the second mapping relationship.

With reference to the second aspect, in some implementations, the method further includes: sending request information, where the request information is used to request the information indicating the second mapping relationship.

Based on this technical solution, the access network device may obtain the second mapping relationship, and route the uplink data based on the second mapping relationship, so that the uplink data is transmitted to the first server-side application for processing, to improve data transmission reliability.

With reference to the second aspect, in some implementations, the first data packet does not include at least one of the following: a transmission control protocol TCP address of the first node or an internet protocol IP address of the first node.

According to a third aspect, a data transmission method is provided. The method may be applied to a first node, or may be applied to a chip, a chip system, a hardware circuit, a software module, a combination of a hardware circuit and a software module, or the like installed in the first node. The following uses the first node as an example for description. The first node is configured to load a first server-side application corresponding to a first client application, the first node is a core network element, and the first server-side application is from a third-party system. The method includes: receiving a second data packet via a first session, where the second data packet is generated based on a first data packet sent by a terminal device, the first data packet includes uplink data of the first client application, a first client corresponds to a first server side, and the first session is a session between the terminal device and the first node; and processing the uplink data by using the first server-side application.

Some implementations of the third aspect are implementations corresponding to some implementations of the first aspect and the second aspect. For beneficial technical effects of some implementations of the third aspect, refer to the descriptions of related implementations of the first aspect and the second aspect. Details are not described herein again.

With reference to the third aspect, in some implementations, the first node is configured to load at least one server-side application, the first session is used to carry data of the first server-side application in the at least one server-side application, and the first client application corresponds to the first server-side application.

With reference to the third aspect, in some implementations, the first node is configured to load a plurality of server-side applications, the first session is used to carry data of the plurality of server-side applications, and the first client application corresponds to one of the plurality of server-side applications.

With reference to the third aspect, in some implementations, the first data packet includes indication information of the first server-side application, and the second data packet includes the indication information of the first server-side application and the uplink data.

With reference to the third aspect, in some implementations, the first data packet includes the indication information of the first server-side application, the second data packet includes port information of the first server-side application and the uplink data, and there is a second mapping relationship between the port information of the first server-side application and the indication information of the first server-side application.

With reference to the third aspect, in some implementations, the first data packet does not include at least one of the following: a transmission control protocol TCP address of the first node or an internet protocol IP address of the first node.

According to a fourth aspect, a communication method is provided. The method may be applied to a first node, or may be applied to a chip, a chip system, a hardware circuit, a software module, a combination of a hardware circuit and a software module, or the like installed in the first node. The following uses the first node as an example for description. The first node is configured to load a first server-side application corresponding to a first client application, the first node is a core network element, and the first server-side application is from a third-party system. The method includes: generating downlink data of the first server-side application; and sending a third data packet via a first session, where the third data packet includes the downlink data, and the first session is a session between a terminal device and the first node.

Based on this technical solution, the first node may send the downlink data via the first session, so that the downlink data can be transmitted via the first session to the terminal device on which the first client application is deployed, without depending on the TCP/IP address protocol, to reduce transmission overheads.

With reference to the fourth aspect, in some implementations, the first node is configured to load at least one server-side application, the first session is used to carry data of the first server-side application in the at least one server-side application, and the first client application corresponds to the first server-side application.

Based on this technical solution, an independent first session may be established between the first node and the terminal device based on the first server-side application. The first node may send, via the first session, the downlink data generated by the first server-side application. The terminal device may receive the downlink data via the first session, and transmit uplink data to the first client application based on the first session, to implement reliable transmission of data packets.

With reference to the fourth aspect, in some implementations, the first node is configured to load a plurality of server-side applications, the first session is used to carry data of the plurality of server-side applications, and the first client application corresponds to one of the plurality of server-side applications.

Based on this technical solution, a shared first session may be established between the first node and the terminal device, that is, at least one server-side application loaded on the first node may share the first session. The first node may send, via the first session, downlink data generated by the plurality of server-side applications, to simplify a session establishment procedure.

With reference to the fourth aspect, in some implementations, the third data packet includes indication information of the first server-side application.

Based on this technical solution, the shared first session may be established between the first node and the terminal device, the third data packet may include the indication information of the first server-side application, and the terminal device that receives the downlink data may obtain the indication information of the first server-side application, and therefore reliably transmit the downlink data to a first client device, to implement reliable transmission of the data packets.

With reference to the fourth aspect, in some implementations, the first data packet does not include at least one of the following: a transmission control protocol TCP address of the terminal device or an internet protocol IP address of the terminal device.

According to a fifth aspect, a communication method is provided. The method may be applied to an access network device, or may be applied to a chip, a chip system, a hardware circuit, a software module, a combination of a hardware circuit and a software module, or the like installed in the access network device. The following uses the access network device as an example for description. The method includes: receiving a third data packet via a first session, where the third data packet includes downlink data of a first server-side application of a first node, the first session is a session between a terminal device and the first node, the first node is configured to load the first server-side application corresponding to a first client application, the first node is a core network element, and the first server-side application is from a third-party system; and sending a fourth data packet via the first session, where the fourth data packet is generated based on the third data packet.

Some implementations of the fifth aspect are implementations corresponding to some implementations of the fourth aspect. For beneficial technical effects of some implementations of the fifth aspect, refer to the descriptions of related implementations of the fourth aspect. Details are not described herein again.

With reference to the fifth aspect, in some implementations, the first node is configured to load at least one server-side application, the first session is used to carry data of the first server-side application in the at least one server-side application, and the first client application corresponds to the first server-side application.

With reference to the fifth aspect, in some implementations, the first node is configured to load a plurality of server-side applications, the first session is used to carry data of the plurality of server-side applications, and the first client application corresponds to one of the plurality of server-side applications.

With reference to the fifth aspect, in some implementations, the third data packet includes the indication information of the first server-side application, and the fourth data packet includes the indication information of the first server-side application and the downlink data.

Based on this technical solution, a shared first session may be established between the first node and the terminal device, the third data packet sent by the first node may carry the indication information of the first server-side application, the terminal device may obtain the indication information of the first server-side application, and the access network device may not need to parse the indication information of the first server-side application, to simplify processing complexity of the access network device.

With reference to the fifth aspect, in some implementations, the fourth data packet includes the indication information of the first server-side application, the third data packet includes port information of the first server-side application and the downlink data, and there is a second mapping relationship between the port information of the first server-side application and the indication information of the first server-side application.

Based on this technical solution, the shared first session may be established between the first node and the terminal device, the third data packet sent by the first node may carry the port information of the first server-side application, the access network device may obtain the second mapping relationship between the indication information of the first server-side application and the port information of the first server-side application, and the access network device may route the downlink data based on the second mapping relationship, so that the downlink data is transmitted to the first client application for processing, to implement reliable transmission of data packets.

With reference to the fifth aspect, in some implementations, the method further includes: receiving information indicating the second mapping relationship.

With reference to the fifth aspect, in some implementations, the method further includes: sending request information, where the request information is used to request the information indicating the second mapping relationship.

Based on this technical solution, the access network device may obtain the second mapping relationship, and route the downlink data based on the second mapping relationship, so that the downlink data is transmitted to the first client application for processing, to improve data transmission reliability.

With reference to the fifth aspect, in some implementations, the first data packet does not include at least one of the following: a transmission control protocol TCP address of the terminal device or an internet protocol IP address of the terminal device.

According to a sixth aspect, a data communication method is provided. The method may be applied to a terminal device, or may be applied to a chip, a chip system, a hardware circuit, a software module, a combination of a hardware circuit and a software module, or the like installed in the terminal device. The following uses the terminal device as an example for description. The method includes: receiving a fourth data packet via a first session, where the fourth data packet is generated based on a third data packet sent by a first node, the fourth data packet includes downlink data corresponding to a first server-side application, a first client corresponds to a first server side, the first session is a session between a terminal device and the first node, the first node is configured to load the first server-side application corresponding to the first client application, the first node is a core network element, and the first server-side application is from a third-party system; and processing the downlink data by using the first client application.

Some implementations of the sixth aspect are implementations corresponding to some implementations of the first aspect and the second aspect. For beneficial technical effects of some implementations of the sixth aspect, refer to the descriptions of related implementations of the first aspect and the second aspect. Details are not described herein again.

With reference to the sixth aspect, in some implementations, there is a first mapping relationship between the first session and the first client application.

With reference to the sixth aspect, in some implementations, the first node is configured to load at least one server-side application, the first session is used to carry data of the first server-side application in the at least one server-side application, and the first client application corresponds to the first server-side application.

With reference to the sixth aspect, in some implementations, the first node is configured to load a plurality of server-side applications, the first session is used to carry data of the plurality of server-side applications, and the first client application corresponds to one of the plurality of server-side applications.

With reference to the sixth aspect, in some implementations, the third data packet includes indication information of the first server-side application, and the fourth data packet includes the indication information of the first server-side application and the downlink data.

With reference to the sixth aspect, in some implementations, the third data packet includes port information of the first server-side application, the fourth data packet includes the indication information of the first server-side application and uplink data, and there is a second mapping relationship between the port information of the first server-side application and the indication information of the first server-side application.

With reference to the sixth aspect, in some implementations, the third data packet does not include at least one of the following: a transmission control protocol TCP address of the terminal device or an internet protocol IP address of the terminal device.

According to a seventh aspect, a data transmission method is provided. The method is applied to a communication system, the system includes a terminal device, an access network device, and a first node, the first node is a core network element, the first node is configured to load a first server-side application, and the first server-side application is from a third-party system. The method includes: The terminal device generates uplink data of a first client application. The terminal device sends a first data packet to the access network device via a first session, where the first data packet includes the uplink data, and the first session is a session between the terminal device and the first node. The access network device sends a second data packet to the first node via the first session, where the second data packet is generated based on the first data packet. The first node processes the uplink data by using the first server-side application.

Some implementations of the seventh aspect are implementations corresponding to some implementations of the first aspect, the second aspect, and the third aspect. For some implementations of the fourth aspect and beneficial technical effects of some implementations, refer to related descriptions of the first aspect, the second aspect, and the third aspect. Details are not described herein again.

According to an eighth aspect, a communication method is provided. The method is applied to a communication system, the system includes a terminal device, an access network device, and a first node, the first node is a core network element, the first node is configured to load a first server-side application, and the first server-side application is from a third-party system. The method includes: The first node generates downlink data of the first server-side application. The first node sends a third data packet to the access network device via a first session, where the third data packet includes the downlink data. The access network device sends a fourth data packet to the terminal device via the first session, where the fourth data packet is generated based on the third data packet. The terminal device processes the downlink data by using a first client application.

Some implementations of the eighth aspect are implementations corresponding to some implementations of the fourth aspect, the fifth aspect, and the sixth aspect. For some implementations of the eighth aspect and beneficial technical effects of some implementations, refer to related descriptions of the fourth aspect, the fifth aspect, and the sixth aspect. Details are not described herein again.

According to a ninth aspect, a communication apparatus is provided. The apparatus is used for a terminal device. The apparatus includes a processing module and a communication module. The processing module is configured to generate uplink data of a first client application. The communication module is configured to send a first data packet via a first session, where the first data packet includes the uplink data, the first session is a session between the terminal device and a first node, the first node is configured to load a first server-side application corresponding to the first client application, the first node is a core network element, and the first server-side application is from a third-party system.

Implementations of the ninth aspect are implementations corresponding to the implementations of the first aspect. For the implementations of the tenth aspect and beneficial technical effects of the implementations, refer to related descriptions of the first aspect. Details are not described herein again.

According to a tenth aspect, a communication apparatus is provided. The apparatus is used for an access network device, and the apparatus includes a processing module and a communication module. The communication module is configured to receive a first data packet via a first session, where the first data packet includes uplink data of a first client application of a terminal device, the first session is a session between the terminal device and a first node, the first node is configured to load a first server-side application corresponding to the first client application, the first node is a core network element, and the first server-side application is from a third-party system. The processing module is configured to generate a second data packet. The communication module is configured to send the second data packet via the first session, where the second data packet is generated based on the first data packet.

Implementations of the tenth aspect are implementations corresponding to the implementations of the second aspect. For the implementations of the tenth aspect and beneficial technical effects of the implementations, refer to related descriptions of the second aspect. Details are not described herein again.

According to an eleventh aspect, a communication apparatus is provided. The apparatus is used for a first node, the apparatus includes a processing module and a communication module, the first node is configured to load a first server-side application corresponding to a first client application, the first node is a core network element, and the first client application is from a third-party system. The communication module is configured to receive a second data packet via a first session, where the second data packet is generated based on a first data packet sent by a terminal device, the first data packet includes uplink data of the first client application, and the first session is a session between the terminal device and the first node. The processing module is configured to process the uplink data by using the first server-side application.

Implementations of the eleventh aspect are implementations corresponding to the implementations of the third aspect. For the implementations of the eleventh aspect and beneficial technical effects of the implementations, refer to related descriptions of the third aspect. Details are not described herein again.

According to a twelfth aspect, a communication apparatus is provided. The apparatus is used for a first node, the apparatus includes a processing module and a communication module, the first node is configured to load a first server-side application corresponding to a first client application, the first node is a core network element, and the first server-side application is from a third-party system. The processing module is configured to generate downlink data of the first server-side application. The communication module is configured to send a third data packet via a first session, where the third data packet includes the downlink data, and the first session is a session between a terminal device and the first node.

Implementations of the twelfth aspect are implementations corresponding to the implementations of the fourth aspect. For the implementations of the twelfth aspect and beneficial technical effects of the implementations, refer to related descriptions of the fourth aspect. Details are not described herein again.

According to a thirteenth aspect, a communication apparatus is provided. The apparatus is used for an access network device, and the apparatus includes a processing module and a communication module. The communication module is configured to receive a third data packet, where the third data packet includes downlink data of a first server-side application of a first node, the first session is a session between a terminal device and the first node, the first node is configured to load the first server-side application corresponding to a first client application, the first node is a core network element, and the first server-side application is from a third-party system. The processing module is configured to generate a fourth data packet based on the third data packet. The communication module is further configured to send the fourth data packet via the first session.

Implementations of the thirteenth aspect are implementations corresponding to the implementations of the fifth aspect. For the implementations of the thirteenth aspect and beneficial technical effects of the implementations, refer to related descriptions of the fifth aspect. Details are not described herein again.

According to a fourteenth aspect, a communication apparatus is provided. The apparatus is used for a terminal device, and the apparatus includes a processing module and a communication module. The communication module is configured to receive a fourth data packet via a first session, where the fourth data packet is generated based on a third data packet sent by a first node, the fourth data packet includes downlink data of a first server-side application, a first client corresponds to a first server side, the first session is a session between the terminal device and the first node, the first node is configured to load the first server-side application corresponding to the first client application, the first node is a core network element, and the first server-side application is from a third-party system. The processing module is configured to process the downlink data by using the first client application.

Implementations of the fourteenth aspect are implementations corresponding to the implementations of the sixth aspect. For the implementations of the fourteenth aspect and beneficial technical effects of the implementations, refer to related descriptions of the sixth aspect. Details are not described herein again.

According to a fifteenth aspect, a communication apparatus is provided. The communication apparatus includes a first function, the first function is used to determine a first session corresponding to a first client application, the first session is a session between the communication apparatus and a first node, the first node is configured to load a first server-side application corresponding to the first client application, the first node is a core network element, and a first application task is from a third-party system.

With reference to the fifteenth aspect, in some implementations, the first function is used to determine a first mapping relationship between the first session and the first client application.

With reference to the fifteenth aspect, in some implementations, the first function is used to deactivate a packet data convergence protocol PDCP layer robust header compression ROHC function.

According to a sixteenth aspect, a communication apparatus is provided. The communication apparatus has a function of implementing the method according to any one of the first aspect to the eighth aspect or the possible implementations of the first aspect to the eighth aspect. The function may be implemented by hardware, or may be implemented by hardware executing corresponding software. The hardware or the software includes one or more units or modules corresponding to the function.

According to a seventeenth aspect, a communication apparatus is provided, including at least one processor. The at least one processor is coupled to at least one memory, and the at least one processor is configured to execute a computer program or instructions stored in the at least one memory, so that the communication apparatus performs the method according to any one of the first aspect to the eighth aspect or any implementation of any aspect.

According to an eighteenth aspect, a communication apparatus is provided, including a processor and a communication interface. The communication interface is configured to receive data and/or information, and transmit the received data and/or information to the processor. The processor processes the data and/or information; and the communication interface is further configured to output data and/or information that are/is obtained after processing by the processor, so that the method according to any one of the first aspect to the eighth aspect or any implementation of any aspect is performed.

According to a nineteenth aspect, a computer-readable storage medium is provided. The computer-readable storage medium stores computer instructions, and when the computer instructions are run on a computer, the method according to any one of the first aspect to the eighth aspect or any possible implementation of any one of these aspects is performed.

According to a twentieth aspect, a computer program product is provided. The computer program product includes computer program code, and when the computer program code is run on a computer, the method according to any one of the first aspect to the eighth aspect or any possible implementation of any one of these aspects is performed.

According to a twenty-first aspect, a communication system is provided, including a communication apparatus that performs the method according to any one of the first aspect to the third aspect, and/or a communication apparatus that performs the method according to any one of the fourth aspect to the sixth aspect.

According to a twenty-second aspect, a communication system is provided, including the communication apparatus according to any one or more of the ninth aspect to the twentieth aspect, or the communication apparatus according to any possible implementation of any one of these aspects.

### BRIEF DESCRIPTION OF DRAWINGS

FIG. 1 is a diagram of a network architecture according to an embodiment of this application;
FIG. 2 is a diagram of a structure of a communication architecture in which a server-side application is deployed on a core network element according to an embodiment of this application;
FIG. 3 is a diagram of a 5G network protocol stack;
FIG. 4 is a diagram of a data packet format;
FIG. 5 is a diagram of a first determining manner according to an embodiment of this application;
FIG. 6 is a diagram of a protocol stack corresponding to a first determining manner according to an embodiment of this application;
FIG. 7 is a diagram of a second determining manner according to an embodiment of this application;
FIG. 8 is a diagram of a first protocol stack corresponding to a second determining manner according to an embodiment of this application;
FIG. 9 is a diagram of a second protocol stack corresponding to a second determining manner according to an embodiment of this application;
FIG. 10 is a schematic flowchart of communication method according to an embodiment of this application;
FIG. 11 is a schematic flowchart of another communication method according to an embodiment of this application;
FIG. 12 is a schematic flowchart of a method for obtaining a second mapping relationship by an access network device according to an embodiment of this application;
FIG. 13 is a diagram of a communication apparatus according to an embodiment of this application; and
FIG. 14 is a diagram of another communication apparatus according to an embodiment of this application.

### DESCRIPTION OF EMBODIMENTS

The following describes technical solutions of this application with reference to the accompanying drawings.

The technical solutions provided in this application may be applied to various communication systems, for example, a 5th generation (5th generation, 5G) communication system like a new radio (new radio, NR) system, a satellite communication system, a communication system evolved from 5G like a 6th generation (6th generation, 6G) mobile communication system, or a system integrating a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A node in a communication system may send a signal to another node or receive a signal from another node. The signal may include information, signaling, data, or the like. The node may also be replaced with an entity, a network entity, a device, a communication device, a communication module, a network element, a communication node, or the like. In this application, the node is used as an example for description.

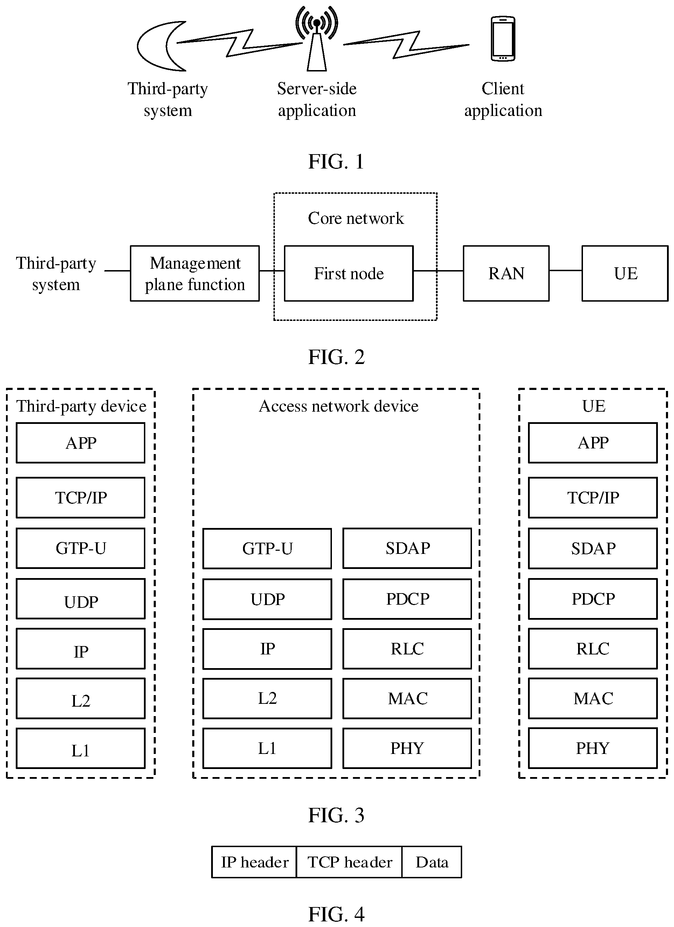

FIG. 1 is a diagram of a network architecture according to an embodiment of this application. As shown in FIG. 1, the network architecture may include but is not limited to the following: a client application and a server-side application.

### 1. Server-side application

The server-side application is an application program running inside a mobile network (mobile network), and can be responsible for processing and responding to a request from a client, and provide a user with network services such as centralized computation, information processing, and data management. For example, the mobile network may be a network that complies with the 3rd generation partnership project (3^{rd} generation partnership project, 3GPP) specification or a mobile network specification defined in the future, for example, a public land mobile network (public land mobile network, PLMN).

For ease of description, in embodiments of this application, a device on which the server-side application is deployed is referred to as a first node. The first node may obtain a server-side application program file from a third-party system. The third-party system is a system outside the mobile network, for example, a local server or a cloud server of each developer (producer) vendor. For example, the first node may obtain a program file from the internet providing various application services (over the top, OTT) for the user. The first node loads the program file, so that the program file exists in the first node, to implement deployment of the server-side application.

In embodiments of this application, the program file that is provided by the third-party system and that is deployed on the first node may be referred to as the server-side application, a network server (net server), a task, an application instance, or another possible name. This is not particularly limited in this application. For ease of description, embodiments of this application are described by using the server-side application as an example, but the server-side application may be replaced with any one of the foregoing names.

One or more server-side applications may be deployed on the first node. The plurality of server-side applications may be from a same third-party system or different third-party systems. This is not particularly limited in this application.

### 2. Client (client) application

The client application may also be referred to as an application (application, APP) briefly, and is an APP program running inside user equipment (user equipment, UE). A client is usually responsible for interacting with a user, displaying data and an interface, and communicating and interacting with a server-side application, to provide a network service for the user.

It should be noted that one server-side application corresponds to one client application, that is, there is a one-to-one correspondence between the server-side application and the client application.

It may be understood that the server-side application (net server) in embodiments of this application may exist on the first node, and provide a network service for the user. For example, the first node may create a complete running environment for the server-side application. This feature is different from an existing general-purpose task. For example, for general-purpose tasks such as computation, data collection, or positioning, in these general-purpose tasks, services are usually not provided for the user based on a specific third-party system, and an execution body of the general-purpose tasks may provide an execution result in a dynamic deployment and execution manner. In embodiments of this application, in a solution in which the server-side application provided by the third-party system is deployed inside the mobile network, the first node inside the mobile network provides the user with a service that is based on the server-side application. Compared with a solution in which a device (for example, a device on which a cloud server is deployed) inside a non-mobile network provides the user with a service, the first node can flexibly use a resource in the mobile network to provide the user with the service, to improve quality of service.

The first node is in the mobile network. For example, the first node may be a core network element, for example, a task process function (task process function, TPF). In embodiments of this application, the server-side application and the client application may interact with each other according to a communication protocol between the first node and the UE, for example, the TPF interacts with the UE. For ease of understanding embodiments of this application, the following describes the communication system with reference to FIG. 2.

FIG. 2 is a diagram of a structure of a communication architecture in which a server-side application is deployed on a core network element according to an embodiment of this application. As shown in FIG. 2, the communication architecture includes:
1. Management plane function: can be responsible for communicating and interacting with a third-party system and a core network element. For example, the management plane function may include a network artificial intelligence management orchestration (network AI management orchestration, NAMO).
2. (Radio) access network ((radio) access network, (R)AN) device: may provide a function of accessing a communication network for an authorized user in a specific area. For ease of description, the following uses the AN device for representation.

The AN device may use different radio access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), or the like. The AN device may allow interconnection between the terminal device and a 3GPP core network by using the non-3GPP technology.

The AN device can be responsible for functions such as radio resource management, quality of service (quality of service, QoS) management, and data compression and encryption on an air interface side. The AN device provides an access service for the terminal device, to complete forwarding of control signals and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), a transmission reception point (transmission reception point, TRP), or the like; may be a gNB or a transmission point (TRP or TP) in a 5G (for example, NR) system, or one antenna panel or a group of antenna panels (including a plurality of antenna panels) of a base station in the 5G system; or may be a network node constituting a gNB or a transmission point, for example, a distributed unit (distributed unit, DU), or a base station in a 6G system. A specific technology used by the AN device and a specific device form of the AN device are not limited in embodiments of this application.

3. Terminal device: may be referred to as an access terminal, UE, a subscriber station, a mobile station, a mobile console, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, the wearable device, a terminal device in a 5G network, a terminal device in a future evolved public land mobile communication network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device, and is a generic term for wearable devices developed by intelligently designing daily wearables by using a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data interaction, and cloud interaction. In a broad sense, wearable intelligent devices include a full-featured and large-size device that can implement complete and partial functions without depending on a smartphone, for example, a smart watch or smart glasses, and a device that focuses on only one type of application function and needs to work with another device such as a smartphone, for example, various smart bands or smart jewelry for vital sign monitoring.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component.

4. Core network (core network, CN): can provide user connections, manage users, and bear services. The first node on which the server-side application is deployed may be any one or more core network elements in the core network.

It may be understood that, the network architecture shown above is merely an example for description, and the network architecture applicable to embodiments of this application is not limited thereto. Any network architecture that can implement functions of the network elements is applicable to embodiments of this application.

It may be further understood that network elements in embodiments of this application, such as a TPF and a task control function (task control function, TCF), may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It may be further understood that the foregoing names are defined merely for distinguishing between different functions, and should not constitute any limitation on this application. This application does not exclude a possibility of using other names in another future network.

For ease of understanding the technical solutions of this application, concepts of communication protocols used in embodiments of this application are described.

Signals may be received and sent between two devices in a communication system according to communication protocols. For example, existing communication protocols include but are not limited to: physical layer (physical, PHY), medium access control (medium access control, MAC), radio link control (radio link control, RLC), packet data convergence protocol (packet data convergence protocol, PDCP), service data adaptation protocol (service data adaption protocol, SDAP), transmission control protocol/internet protocol (transmission control protocol/internet protocol, TCP/IP) layer, application (application, APP), layer 1 (layer 1, L1), layer 2 (layer 2, L2), an internet protocol (internet protocol, IP) layer, user datagram protocol (user datagram protocol, UDP), and general packet radio service (general packet radio service) tunnel protocol for the user plane (GPRS tunnel protocol for the user plane, GTP-U).

It may be understood that names of network elements, names of protocol layers, names of data units corresponding to some protocol layers, names of interfaces between the network elements, and the like in this application are merely used as examples. In a future communication network, the names of the network elements, the names of the protocol layers, the names of the data units corresponding to the protocol layers, the names of the interfaces between the network elements, and the like may be other names. All these names shall fall within the technical scope of this application provided that they have same or similar functions and achieve same or similar technical objectives. For example, in a 5G network, a network function may be represented as an NF, a terminal device may also be referred to as UE, a medium access control layer may be represented as a MAC layer, a protocol data unit may be represented as a PDU, and a service data unit may be represented as an SDU. In a 6G network, the foregoing names may be new names.

For brevity of description, the following embodiments describe network elements, protocol layers, data units corresponding to some protocol layers, and the like by using some abbreviations as examples. However, the abbreviations are merely used as examples, and may be replaced with other abbreviations or names. This is not limited.

FIG. 3 is a diagram of a 5G network protocol stack. As shown in FIG. 3, a third-party device outside a mobile network may provide a service for UE, and the TCP/IP protocol may provide a connection-oriented communication service for the third-party device (for example, a device in which a cloud server is located) and the UE. For example, the third-party device and the UE have a data transmission requirement, and a TCP/IP protocol stack entity may be responsible for establishing a connection, sending data, and disconnecting a connection based on indications of an APP. To implement reliable transmission of data between the third-party device and the UE, the TCP entity may add a TCP header to the front of to-be-sent data, and the IP entity may add an IP header to the front of the TCP header. Therefore, the third-party device and the UE may implement reliable communication based on the TCP header and the IP header.

FIG. 4 is a diagram of a data packet format. As shown in FIG. 4, a data packet includes at least data, a TCP header, and an IP header. For example, the TCP header includes at least a source port number and a destination port number, and the IP header includes at least a source IP address and a destination IP address. A port number may be used to distinguish between APPs. A combination of the source port number and the source IP address may identify a sending address of the data, and a combination of the destination port number and the destination IP address may identify a receiving address of the data.

It can be learned from FIG. 3 and FIG. 4 that, data transmission is performed between the third-party device and the UE according to the TCP/IP, and the TCP header and the IP header occupy a large quantity of transmission overheads. For example, generally, a size of a maximum transmission unit (maximum transmission unit, MTU) is 576 bytes (byte, B), and sizes of the TCP header and the IP header are greater than 40 bytes. In other words, the TCP header and the IP header occupy about 7% of transmission overheads. Especially for some data packets whose data amount is less than 100 bytes, the transmission overheads occupied by the TCP header and the IP header may reach more than 50%.

Therefore, this application provides a technical solution. UE can determine a session corresponding to a client application, and the UE can send uplink data via the determined session, so that the uplink data can be transmitted to a first node on which a first server-side application is deployed, without depending on the TCP/IP address protocol, to reduce transmission overheads.

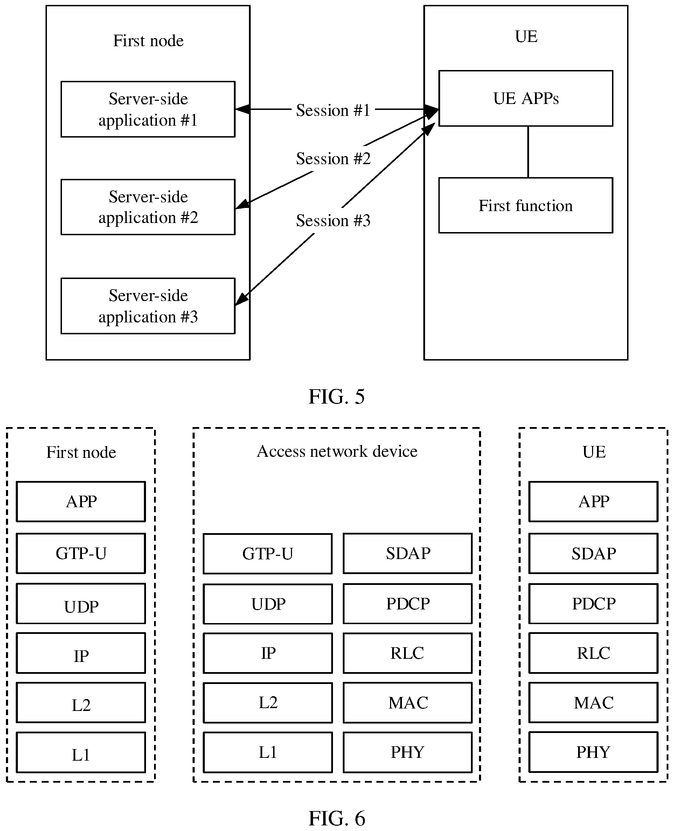

A manner in which the UE determines the session is related to a type of the session. In some implementations, the UE may include a first function, and the first function may be used to serve a client application on the UE. For example, the first function may be used to determine a session corresponding to the client application. For example, there is an application-granularity session between the UE and the first node. For example, one session is used to carry data of one server-side application. For another example, there is a node-granularity session between the UE and the first node. For example, one session is used to carry data of a plurality of server-side applications on the first node. For ease of understanding embodiments of this application, the following describes the two implementations with reference to FIG. 5 and FIG. 6 respectively.

FIG. 5 is a diagram of a first determining manner according to an embodiment of this application. As shown in FIG. 5, a server-side application #1, a server-side application #2, and a server-side application #3 are deployed on a first node, and correspondingly establish a session #1, a session #2, and a session #3 respectively with UE. In other words, any server-side application on the first node may establish an independent session with the UE, and the session is at an application granularity. A first function may manage a mapping relationship between three client applications (represented by UE APPs in FIG. 5) and three sessions, and provide a data sending function for the UE APPs based on the mapping relationship.

For ease of description, in this embodiment of this application, the server-side application #1 corresponds to a client application #1, the server-side application #2 corresponds to a client application #2, and the server-side application #3 corresponds to a client application #3. Details are not described again below.

For example, in an uplink direction, the client application #1 corresponding to the server-side application #1 generates to-be-sent uplink data, the first function may add, to the uplink data based on the mapping relationship, APP description information corresponding to the client application #1, and transmit a quality of service (quality of service, QoS) flow corresponding to the uplink data to an SDAP entity of the UE, and the SDAP entity may perform QoS flow mapping based on the APP description information attached to the QoS flow, to map the QoS flow to a bearer of the session #1 corresponding to the server-side application #1. An SDAP entity of a RAN obtains the uplink data, and may map the uplink data to a tunnel of the session #1 corresponding to the server-side application #1. The first node may determine, based on the tunnel corresponding to the server-side application #1 and a tunnel end point identifier (tunnel end point identifier, TEID), the server-side application #1 corresponding to the data, and transmit the data to the server-side application #1, and the server-side application #1 performs processing.

For another example, in a downlink direction, the server-side application #1 generates downlink data, the server-side application #1 may send the data to the RAN over the tunnel of the session #1, the RAN sends the data to the UE via the bearer of the session #1, and the first function determines the client application #1 based on a mapping relationship between a session and a client application, and transmits the data to the client application #1.

It should be understood that because the server-side application is deployed on the first node inside a mobile network, the first node forwards the data to the server-side application without using an interface connected to the outside of the mobile network. In other words, a data packet is processed in the mobile network, and is not transmitted to the outside of the mobile network. A TCP header and an IP header may not need to be added to the data packet, to improve transmission resource utilization.

FIG. 6 is a diagram of a protocol stack corresponding to a first determining manner according to an embodiment of this application. As shown in FIG. 6, in the protocol stack, a TCP/IP layer may not be designed. A first function may determine, by using UE APP information, a session corresponding to a data packet, and map the data packet to the session. Reliable transmission of the data packet can be implemented without depending on the TCP/IP, to reduce transmission overheads occupied by a TCP header and an IP header, and improve transmission resource utilization.

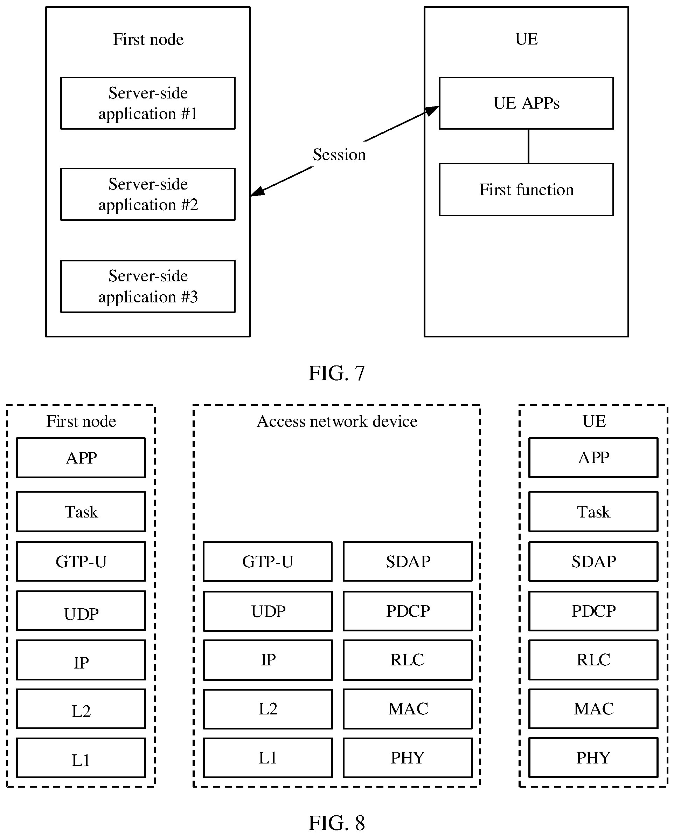

FIG. 7 is a diagram of a second determining manner according to an embodiment of this application. As shown in FIG. 7, different from FIG. 7 in which each server-side application may establish an independent session with UE, a plurality of server-side applications deployed on a first node may share one session. For example, a server-side application #1, a server-side application #2, and a server-side application #3 are deployed on the first node, and three server-side applications may share one session.

For example, the server-side application #1, the server-side application #2, and the server-side application #3 separately provide a network service for the UE, and different identification information is allocated to different server-side applications, for example, a task identifier #1, a task identifier #2, and a task identifier #3 respectively. A first function may be used to determine and manage a mapping relationship between identification information of a server-side application and a client application, and provide a data transmission function for the client application based on the mapping relationship.

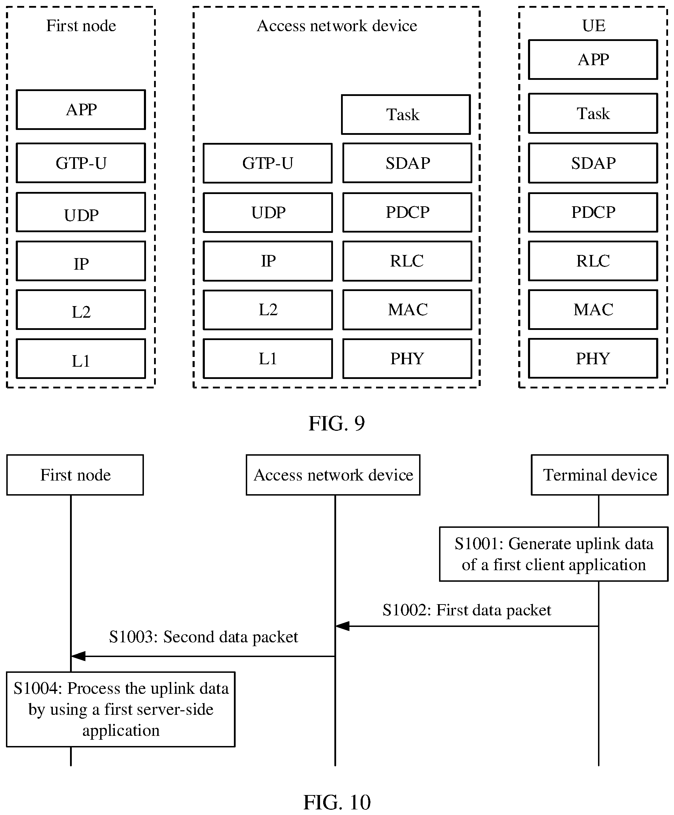

It should be understood that, in this implementation, the server-side application is deployed on the first node, and the first node transmits data to the server-side application without using an interface connected to the outside of a mobile network. In other words, a data packet is processed in the mobile network, and is not transmitted to the outside of the mobile network. Indication information of the server-side application may be added to the data packet, but a TCP header and an IP header do not need to be added. In this case, a protocol layer used to add the indication information of the server-side application may be designed in a protocol stack. For example, indication information of a server-side application may include an identifier, an index, a sequence number, or the like of the server-side application. This is not particularly limited in this application. The following mainly uses an example in which the indication information is an identifier for description. In this implementation, a task (task) layer used to add an identifier may be designed in the protocol stack, and no TCP/IP layer is designed. The following describes the two protocol stacks in detail with reference to FIG. 8 and FIG. 9.

FIG. 8 is a diagram of a first protocol stack corresponding to a second session determining manner according to an embodiment of this application. As shown in FIG. 8, in the protocol stack, a protocol layer, for example, a task (task) layer, used to add indication information of a server-side application may be designed for each of a first node and UE, and the task layer can be responsible for encapsulating and parsing a task identifier. For example, a task layer of a transmit side may add a task header to the front of a data packet, where the task header includes a task identifier. After receiving data, a task layer of a receive side parses the task header to obtain the task identifier, and determines, based on the task identifier, a target server-side application or a target client application corresponding to the data. In the protocol stack, a TCP/IP layer may not be designed, and the first node may determine, based on the indication information of the server-side application, the target server-side application or the target client application corresponding to the data packet. Reliable transmission of the data packet can be implemented without depending on the TCP/IP, to reduce transmission overheads occupied by a TCP header and an IP header, and improve transmission resource utilization.

For example, in an uplink direction, a client application #1 generates uplink data, and the UE may add indication information of the server-side application #1 to the uplink data. The UE sends, to the first node via a shared session, data that carries the indication information of the server-side application #1, and the first node forwards the to-be-sent data to the corresponding server-side application #1 based on the indication information of the server-side application #1.

For another example, in a downlink direction, a server-side application #1 generates downlink data, and the first node adds indication information corresponding to the server-side application #1 to the downlink data, and sends data of the indication information of the server-side application #1 to the UE. The UE determines, based on the indication information of the server-side application #1, a client application #1 corresponding to the server-side application #1, and transmits the data to the client application #1.

In this implementation, a RAN may not need to parse the indication information of the server-side application #1. In other words, the indication information of the server-side application #1 may also be used as a part of a payload (payload) for GTP-U encapsulation. Therefore, processing complexity of RAN communication is simplified.

It should be noted that the foregoing data transmit side may obtain the indication information of the server-side application in a plurality of manners. For example, when a third-party system deploys a server-side application on the first node, a network may allocate an identifier to the server-side application, and notify the third-party system and the first node of the identifier. The third-party system may update the identifier to a policy control function (policy control function, PCF), and the PCF may generate a terminal route selection policy (UE route selection policy, URSP) of the server-side application. The URSP includes indication information of the server-side application, and is sent to the UE, so that the UE obtains the indication information of the server-side application. This is not particularly limited in this application.

FIG. 9 is a diagram of a second protocol stack corresponding to a second determining manner according to an embodiment of this application. As shown in FIG. 9, different from the protocol stack shown in FIG. 8, in the protocol stack, a protocol layer used to add indication information of a server-side application may be designed for each of UE and a RAN, and the protocol layer used to add the indication information of the server-side application may not be designed for a first node. The protocol layer of the UE can be responsible for encapsulating and decapsulating the indication information of the server-side application. The protocol layer of the RAN can be responsible for decapsulating the indication information of the server-side application, and determining a mapping relationship between the indication information of the server-side application and port information of the server-side application. For example, data transmission may be performed between the UE and the RAN based on the indication information of the server-side application, and data transmission may be performed between the RAN and the first node based on the port information of the server-side application.

For example, in an uplink direction, a client application #1 may generate uplink data, and the protocol layer of the UE may add a task header to the front of the uplink data, where the task header includes indication information of a server-side application #1. The UE sends, to the RAN via a shared session, the data that carries the indication information of the server-side application #1. The protocol layer of the RAN obtains the indication information of the server-side application #1 by parsing the task header, determines a port number of the server-side application based on the indication information of the server-side application #1, writes the port number of the server-side application #1 into a destination port field of a UDP header, and then sends, to the first node, the data that carries the port number of the server-side application #1. The first node may forward the data to the corresponding server-side application #1 based on the port number of the server-side application #1, and the server-side application #1 performs processing.

For another example, in a downlink direction, a server-side application #1 generates downlink data, the first node writes a port number of the server-side application #1 into a source port field of a UDP header, and the UDP of the RAN parses the UDP header to obtain the port number of the server-side application #1. The protocol layer of the RAN determines indication information of the corresponding server-side application #1 based on the port number of the server-side application #1, reassembles data, adds the server-side application #1 to the front of the data, and sends the data that carries the server-side application #1 to the UE. The protocol layer of the UE obtains the indication information of the server-side application #1 through parsing, and transmits the data to a client application #1 based on the indication information.

It may be understood that a quantity of server-side applications deployed on the first node is not particularly limited in embodiments of this application. When a client application is deployed on the first node, in a possible implementation, the session shown in FIG. 5 may be established between the first node and the UE, and a data packet sent by the UE may not carry indication information of the server-side application. In another possible implementation, the session shown in FIG. 7 may alternatively be established between the first node and the UE, and a data packet sent by the UE may carry indication information of the server-side application.

A quantity of server-side applications sharing a session is not particularly limited in embodiments of this application. When a plurality of server-side applications are deployed on the first node, all server-side applications on the first node may share one session, or some server-side applications on the first node may share one session. This is not particularly limited in this application.

The foregoing describes two manners of communication between the first node and the UE. In the two manners, a data packet may not need to be processed at the TCP/IP layer, to reduce transmission overheads occupied by the TCP header and the IP header, and improve transmission resource utilization. In some implementations, a TCP/IP-related function in the UE, the RAN, or the first node may alternatively be deactivated. For example, a robust header compression (robust header compression, ROHC) function used to compress the TCP header and the IP header in the PDCP may be deactivated. This is not particularly limited in this application.

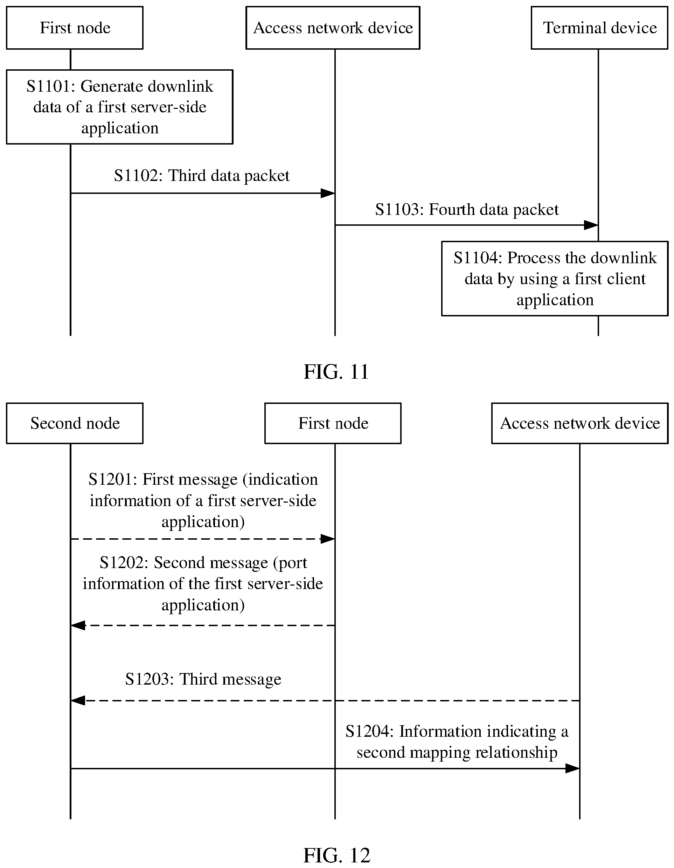

The foregoing describes the system provided in this application, and the following describes the methods provided in this application. For terms mentioned below, refer to the foregoing descriptions. Details are not described below again. FIG. 10 describes a data packet transmission method in an uplink direction, and FIG. 11 describes a data packet transmission method in a downlink direction.

FIG. 10 is a schematic flowchart of communication method according to an embodiment of this application.

S1001: A terminal device generates uplink data of a first client application.

For example, the first client application runs to generate to-be-sent uplink data, and transmits the uplink data to a first function of the terminal device. It should be understood that because there is a one-to-one correspondence between a client application and a server-side application, the uplink data of the first client application also corresponds to uplink data of a first server side.

S1002: The terminal device sends a first data packet to an access network device via a first session. Correspondingly, the access network device receives the first data packet from the terminal device via the first session.

For example, the first function may encapsulate the to-be-sent uplink data, to generate the first data packet. The first function may further determine the first session, and send the first data packet via the first session. The first session is a session between the terminal device and a first node.

It may be understood that the first session may include two communication links. One is a communication link (for example, a data radio bearer (data radio bearer, DRB)) between the terminal device and the access network device, and the other is a communication link (for example, a tunnel) between the access network device and the first node. The first session is indicated by indication information of the first session, for example, an identifier of the first session.

Content included in the first data packet is related to a manner in which the first function determines a session.

In a first possible implementation, if the first function determines the first session in the manner shown in FIG. 5, and the first session is used to carry data of a first server-side application, the first function may obtain a first mapping relationship between the first session and the first client application, and the first data packet may include the uplink data.

For example, the first client application generates the to-be-sent uplink data, and transmits the uplink data to the first function. The first function determines, based on the first mapping relationship, that the uplink data is to be sent via the first session, encapsulates the uplink data based on related information of the first session, to generate the first data packet, and sends the first data packet via a bearer corresponding to the first session.

In a second possible implementation, if the first function determines the first session in the manner shown in FIG. 7, and the first session is used to carry data of at least one server-side application, the first function may obtain indication information of a first server-side application, and the first data packet may include the indication information of the first server-side application and the uplink data.

For example, the first client application generates the to-be-sent uplink data, and transmits the uplink data to the first function. The first function obtains the indication information of the first server-side application, and encapsulates the uplink data based on the indication information of the first server-side application, for example, adds the indication information of the first server-side application, to generate the first data packet, and sends the first data packet via the first session.

S1003: The access network device sends a second data packet to the first node via the first session. Correspondingly, the first node receives the second data packet from the access network device via the first session.

The access network device may generate the second data packet based on the received first data packet in a plurality of manners. In other words, the access network device may route the to-be-sent uplink data in a plurality of manners.

In a first possible implementation, if the first function determines the first session in the manner shown in FIG. 5, and the first data packet is obtained through encapsulation based on the related information of the first session, the access network device may generate the second data packet based on the related information of the first session, and map the second data packet to a tunnel corresponding to the first session. For example, the second data packet may include a TEID and the uplink data.

The first node may obtain a mapping relationship between the first server-side application and the first session, for example, a mapping relationship between the first server-side application and the TEID in the first session. Therefore, after receiving the second data packet, the first node may determine the first server-side application based on the TEID in the second data packet, and transmit the uplink data in the second data packet to the first server-side application.

In a second possible implementation, if the first function determines the first session in the manner shown in FIG. 7, the first data packet is obtained through encapsulation based on the indication information of the first server-side application, and the first data packet includes the indication information of the first server-side application and the uplink data, the access network device may route the uplink data in the following two manners.

### Manner 1:

The access network device may not parse the indication information of the first server-side application, and the indication information of the first server-side application may be encapsulated as a part of a payload. The second data packet still includes the indication information of the first server-side application. Therefore, the first node receives the second data packet, may determine the first server-side application based on the indication information of the first server-side application in the second data packet, and transmit the uplink data in the second data packet to the first server-side application.

### Manner 2:

The access network device may parse the indication information of the first server-side application in the first data packet. The access network device may obtain a second mapping relationship between the indication information of the first server-side application and port (port) information of the first server-side application. The access network device may perform encapsulation based on the port information of the first server-side application, for example, write a port number of the first server-side application into a destination port number in a UDP header. Therefore, the first node receives the second data packet, and may transmit the uplink data in the second data packet to the first server-side application based on the port information of the first server-side application in the second data packet.

S1004: The first node processes the uplink data by using the first server-side application.

The first node may transmit the uplink data to the first server-side application for processing based on the indication information or the port information of the first server-side application in the second data packet.

Based on this technical solution, the terminal device has the first function. The first function may be used to serve the first client application, for example, used to determine the first session corresponding to the first client application. The terminal device may send the uplink data via the first session, so that the uplink data can be transmitted via the first session to the first node on which the first server-side application is deployed, without depending on the TCP/IP address protocol, to reduce transmission overheads.

The foregoing describes the method in which the terminal device sends the uplink data that is based on the first server-side application to the first node. For ease of understanding embodiments of this application, the following describes a method in which the first node sends downlink data that is based on the first server-side application to the terminal device.

FIG. 11 is a schematic flowchart of another communication method according to an embodiment of this application.

S1101: A first node generates downlink data corresponding to a first server-side application.

For example, the first server-side application runs to generate to-be-sent downlink data, and transmits the downlink data to a unit or a module responsible for communication in the first node.

S1102: The first node sends a third data packet to an access network device via a first session. Correspondingly, the access network device receives the third data packet from the first node via the first session.

For example, the first node may encapsulate the to-be-sent downlink data, to generate the third data packet. The first node may further determine the first session, and send a first data packet via the first session. The first session is a session between a terminal device and the first node.

Content included in the third data packet is related to a type of the first session.

In a first possible implementation, as shown in FIG. 5, the first session is used to carry data of the first server-side application. The first node may obtain a third mapping relationship between the first session and the first server-side application, and the third data packet includes the downlink data.

For example, the first server-side application generates the to-be-sent downlink data, and the first node determines, based on the third mapping relationship, that the downlink data is to be sent via the first session, encapsulates the downlink data based on related information of the first session, for example, adds a TEID, to generate the third data packet, and sends the third data packet over a tunnel corresponding to the first session.

In a second possible implementation, as shown in FIG. 7 and FIG. 8, the first session is used to carry data of at least one server-side application. The first node may obtain indication information of the first server-side application, and the third data packet includes the indication information of the first server-side application and the downlink data.

For example, the first server-side application generates the to-be-sent downlink data, and the first node encapsulates the downlink data based on the indication information of the first server-side application, for example, adds the indication information of the first server-side application, to generate the third data packet, and sends the third data packet via the first session.

In a third possible implementation, as shown in FIG. 7 and FIG. 9, the first session is used to carry data related to at least one server-side application. The first node may obtain port information of the first server-side application, and the third data packet may include the port information of the first server-side application and the downlink data.

For example, the first server-side application generates the to-be-sent downlink data, and the first node encapsulates the downlink data based on the port information of the first server-side application, for example, adds a port number of the first server-side application to a source port field of a UDP header, to generate the third data packet, and sends the third data packet via the first session.

S1103: The access network device sends a fourth data packet to the terminal device via the first session. Correspondingly, the terminal device receives the fourth data packet from the access network device via the first session.

The access network device may generate the fourth data packet based on the received third data packet in a plurality of manners. In other words, the access network device may route the to-be-sent downlink data in a plurality of manners.

In a first possible implementation, as shown in FIG. 5, the third data packet is obtained through encapsulation based on the related information of the first session. The access network device may generate the fourth data packet based on the related information of the first session, and send the fourth data packet via a bearer corresponding to the first session. For example, the fourth data packet includes the downlink data.

A first function may obtain a first mapping relationship between the first session and a first client application. Therefore, the first function receives the fourth data packet via the first session, may determine the first client application based on the first session, and transmit the downlink data in the fourth data packet to the first client application.

In a second possible implementation, as shown in FIG. 7 and FIG. 8, the third data packet is obtained through encapsulation based on the indication information of the first server-side application, and the third data packet includes the indication information of the first server-side application. The access network device may not parse the indication information of the first server-side application, and the indication information of the first server-side application may be encapsulated as a part of a payload. The fourth data packet still includes the indication information of the first server-side application. Therefore, a first function receives the fourth data packet, may determine a first client application based on the indication information of the first server-side application in the fourth data packet, and transmit the downlink data in the fourth data packet to the first client application.

In a third possible implementation, as shown in FIG. 7 and FIG. 9, the third data packet is obtained through encapsulation based on the port information of the first server-side application, and the third data packet includes the port information of the first server-side application. The access network device may parse the port information of the first server-side application in the third data packet. The access network device may obtain a second mapping relationship between the indication information of the first server-side application and the port information of the first server-side application. The access network device may obtain the indication information of the first server-side application based on the second mapping relationship, reassemble data based on the indication information of the first server-side application, to generate the fourth data packet, for example, add the indication information of the first server-side application, and send the fourth data packet via the first session. Therefore, a first function receives the fourth data packet, may determine a first client application based on the indication information of the first server-side application in the fourth data packet, and transmit the downlink data in the fourth data packet to the first client application.

S1104: The terminal device processes the downlink data by using the first client application.

The first function may transmit the downlink data to the first client application based on the first session, or transmit the downlink data to the first client application for processing based on the indication information of the first server-side application in the fourth data packet.

The foregoing describes the method in which the first node sends the downlink data that is based on the first server-side application to the terminal device. In the method described above, if the access network device manages the first session by using the method shown in FIG. 9, the access network device manages the second mapping relationship between the indication information of the first server-side application and the port information of the first server-side application. For ease of understanding embodiments of this application, the following describes, by using an example, how the access network device obtains the second mapping relationship.

FIG. 12 is a schematic flowchart of a method for obtaining a second mapping relationship by an access network device according to an embodiment of this application.

Optionally, S1201: A second node sends a first message to a first node. Correspondingly, the first node receives the first message from the second node.

The first message may include indication information of a first server-side application. For example, the first message is used to request the first node to load the first server-side application, and the first message includes the first server-side application and the indication information of the first server-side application. For example, the first message may be a loading request message, and the loading request message carries the first server-side application including the first server-side application (for example, a program file) and the indication information of the first server-side application. Therefore, the first node may load the first server-side application based on the request of the first message, and manage the indication information of the first server-side application, so that the first server-side application is deployed in a network.

The second node may be a node configured to manage the first node. For example, the second node may be a task control function (task control function, TCF).

Optionally, S1202: The first node sends a second message to the second node. Correspondingly, the second node receives the second message from the first node.

The second message may include port information of the first server-side application. For example, in a process of loading the first server-side application, the first node may allocate a port to the first server-side application, and indicate the port information of the first server-side application to the second node by using the second message, so that the second node can obtain the second mapping relationship between the indication information of the first server-side application and the port information of the first server-side application.

The second node obtains the second mapping relationship, and may actively send, to the access network device, information indicating the second mapping relationship. Alternatively, the second node may send, to the access network device based on a request of the access network device, information indicating the second mapping relationship. In this implementation, the access network device may perform the following step S1203.

Optionally, S1203: The access network device sends a third message to the second node. Correspondingly, the second node receives the third message from the access network device.

The third message is used to request the second mapping relationship. For example, when receiving a first data packet from a terminal device, where the first data packet includes the indication information of the first server-side application, or receiving a third data packet from the first node, where the third data packet includes the port information of the first server-side application, the access network device may send, to the second node, information for requesting the second mapping relationship.

S1204: The second node sends, to the access network device, the information indicating the second mapping relationship. Correspondingly, the access network device receives, from the second node, the information indicating the second mapping relationship.

It may be understood that the second node may send, to the access network device based on the request of the third message, the information indicating the second mapping relationship. Alternatively, after obtaining the second mapping relationship, the second node may actively send, to the access network device, the information indicating the second mapping relationship. For example, the second node may broadcast the information indicating the second mapping relationship. Therefore, the access network device may obtain the second mapping relationship, and manage a context of a first session based on the second mapping relationship.

In some implementations, if a first client application of the terminal device is uninstalled, the terminal device may notify the first node that the first client application is uninstalled, and the first node may notify the second node that the first client application is uninstalled. If the first server-side application has an independent first session, the second node may delete the first session. If the first server-side application shares the first session with another server-side application, the second node may notify the access network device to delete related information of the first server-side application, for example, send, to the access network device, information indicating to delete the second mapping relationship. This is not particularly limited in this application.

To implement functions of the communication apparatuses (for example, the first node, the second node, and the terminal device) in embodiments of this application, each communication apparatus may implement corresponding functions in a form of a hardware structure, a software module, or a combination of a hardware structure and a software module.

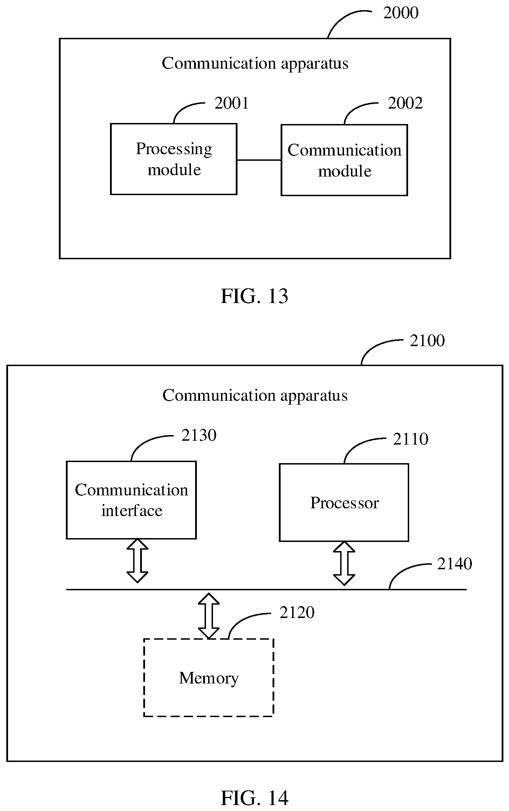

FIG. 13 shows a communication apparatus 2000 according to this application.

As shown in FIG. 13, the communication apparatus 2000 includes a processing module 2001 and a communication module 2002. The communication apparatus 2000 may be a communication device, or may be an apparatus that is used for the communication device and that can implement a corresponding function of the communication device, for example, a chip, a chip system, or a circuit. For example, the communication device may include a first node (for example, a TPF), an access network device, a terminal device, and the like.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the terminal device or the network device in any one of the foregoing method embodiments. A component configured to implement a receiving function in the communication module may be considered as a receiving unit, and a component configured to implement a sending function in the communication module may be considered as a sending unit. In other words, the communication module includes the receiving unit and the sending unit. The processing module is configured to perform an operation/processing related to an internal implementation of the terminal device or the network device in any one of the foregoing method embodiments. It should be understood that for a corresponding specific operation of each module, refer to the descriptions in the method embodiments. Details are not described again.

In addition, it should be noted that the communication module and/or the processing module may be implemented through a virtual module. For example, the processing module may be implemented through a software functional unit or a virtual apparatus, and the communication module may be implemented through a software function or a virtual apparatus. Alternatively, the processing module or the communication module may be implemented through an entity apparatus. For example, if the apparatus is implemented through a chip/hardware circuit, the communication module may be an input/output circuit and/or a communication interface, and perform an input operation (corresponding to the foregoing receiving operation) and an output operation (corresponding to the foregoing sending operation). The processing module is an integrated circuit, a logic circuit, or the like.

Division into the modules in this application is an example, is merely division into logical functions, and may be other division during actual implementation. In addition, functional modules in examples of this application may be integrated into one module, or each of the modules may exist alone physically, or two or more modules may be integrated into one module. The foregoing integrated module may be implemented in a form of hardware, or may be implemented in a form of a software functional module, or a functional module combining hardware and software. This is not limited.

FIG. 14 shows a communication apparatus 2100 according to this application. Refer to FIG. 14. This application further provides the communication apparatus 2100.

Optionally, the communication apparatus 2100 may be a chip or a chip system. Optionally, the chip system in this application may include a chip, or may include a chip and another discrete device.

The communication apparatus 2100 may be configured to implement a function of any network element (for example, the first node, the access network device, or the terminal device) in the communication system described in the foregoing examples. The communication apparatus 2100 may include at least one processor 2110. Optionally, the processor 2110 (or a processing apparatus) is coupled to a memory. The memory may be located in the communication apparatus, the memory may be integrated with the processor, or the memory may be located outside the communication apparatus. For example, the communication apparatus 2100 may further include at least one memory 2120. The memory 2120 stores a computer program, instructions, data, and/or the like necessary for implementing any one of the foregoing embodiments. The processor 2110 may execute the computer program, the instructions, the data, and/or the like stored in the memory 2120, to complete a corresponding function of any network element in any one of the foregoing embodiments.

The communication apparatus 2100 may further include a communication interface 2130. The communication apparatus 2100 may perform information exchange with another device through the communication interface 2130. For example, the communication interface 2130 may be a transceiver, a circuit, a bus, a module, a pin, or a communication interface of another type. When the communication apparatus 2100 is a chip-type apparatus or circuit, the communication interface 2130 in the apparatus 2100 may alternatively be an input/output circuit, and may input information (also referred to as receiving information) and/or output information (also referred to as sending information). The processor may be an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 2110 may cooperate with the memory 2120 and the communication interface 2130. A specific connection medium between the processor 2110, the memory 2120, and the communication interface 2130 is not limited in this application.

Optionally, the processor 2110, the memory 2120, and the communication interface 2130 are connected to each other through a bus 2140. For ease of representation, only one line is for representing the bus in FIG. 14, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction structure or a data structure and that can be accessed by a computer, but is not limited thereto. Alternatively, the memory in this application may be a circuit or any other apparatus that can implement a storage function, and is configured to store program instructions and/or data.

In addition, this application provides a communication apparatus, including at least one processor. The at least one processor is coupled to at least one memory, and the at least one processor is configured to execute a computer program or instructions stored in the at least one memory, so that the communication apparatus has a function of a corresponding network element (for example, the first node, the access network device, or the terminal device) in any one of the foregoing embodiments.

This application further provides a chip, including a processor and a communication interface. The communication interface is configured to receive to-be-processed information and/or data, and send the to-be-processed information and/or data to the processor, and the processor is configured to process the to-be-processed information and/or data, so that a communication apparatus in which the chip is installed has a function of a corresponding network element (for example, the first node, the access network device, or the terminal device) in any one of the foregoing embodiments.

This application further provides a computer-readable storage medium. The computer-readable storage medium stores computer instructions. When the computer instructions are run on a computer, a function of a corresponding network element (for example, the first node, the access network device, or the terminal device) in any one of the foregoing embodiments is implemented.

This application further provides a computer program product. The computer program product includes computer program code. When the computer program code is run on a computer, a function of a corresponding network element (for example, the first node, the access network device, or the terminal device) in any one of the foregoing embodiments is implemented.

This application further provides a wireless communication system, including one or more network elements in any one of the foregoing embodiments. For example, the communication system includes, for example, a first node, an access network device, and a terminal device.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). When the processor is a general-purpose processor, a DSP, an ASIC, an FPGA or another programmable logic device, a discrete gate or transistor logic device, or a discrete hardware component, the memory (a storage module) may be integrated into the processor.

All or some of the technical solutions provided in this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, a terminal device, an access network device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

In the descriptions of embodiments of this application, "a plurality of" means two or more. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the descriptions of embodiments of this application, unless otherwise specified, "/" indicates an "or" relationship between associated objects. For example, A/B may represent A or B. In this application, "and/or" describes only an association relationship for describing associated objects, and represents that three relationships may exist. For example, A and/or B may represent the following three cases: Only A exists, both A and B exist, and only B exists. A and B each may be in a singular or plural form.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, applied to a terminal device, wherein the method comprises:
generating uplink data of a first client application; and
sending a first data packet via a first session, wherein the first data packet comprises the uplink data, the first session is a session between the terminal device and a first node, the first node is configured to load a first server-side application corresponding to the first client application, the first node is a core network element, and the first server-side application is from a third-party system.

2. The method according to claim 1, wherein there is a first mapping relationship between the first session and the first client application.

3. The method according to claim 1 or 2, wherein the first node is configured to load at least one server-side application, the first session is used to carry data of the first server-side application in the at least one server-side application, and the first client application corresponds to the first server-side application.

4. The method according to claim 1 or 2, wherein the first node is configured to load a plurality of server-side applications, the first session is used to carry data of the plurality of server-side applications, and the first client application corresponds to one of the plurality of server-side applications.

5. The method according to claim 4, wherein the first data packet comprises indication information of the first server-side application.

6. The method according to any one of claims 1 to 5, wherein the first data packet does not comprise at least one of the following: a transmission control protocol TCP address of the first node or an internet protocol IP address of the first node.

7. A data transmission method, applied to a first node, wherein the first node is configured to load a first server-side application, the first node is a core network element, the first server-side application is from a third-party system, and the method comprises:
receiving a second data packet via a first session, wherein the second data packet is generated based on a first data packet sent by a terminal device, the first data packet comprises uplink data of a first client application, the first client application corresponds to the first server-side application, and the first session is a session between the terminal device and the first node; and
processing the uplink data by using the first server-side application.

8. The method according to claim 7, wherein the first node is configured to load at least one server-side application, the first session is used to carry data of the first server-side application in the at least one server-side application, and the first client application corresponds to the first server-side application.

9. The method according to claim 8, wherein the first node is configured to load a plurality of server-side applications, the first session is used to carry data of the plurality of server-side applications, and the first client application corresponds to one of the plurality of server-side applications.

10. The method according to claim 9, wherein the first data packet comprises indication information of the first server-side application.

11. The method according to claim 9 or 10, wherein the first data packet comprises the indication information of the first server-side application and the uplink data, and the second data packet comprises the indication information of the first server-side application and the uplink data.

12. The method according to claim 9 or 10, wherein the first data packet comprises the indication information of the first server-side application and the uplink data, the second data packet comprises port information of the first server-side application and the uplink data, and there is a second mapping relationship between the port information of the first server-side application and the indication information of the first server-side application.

13. The method according to any one of claims 7 to 12, wherein the first data packet does not comprise at least one of the following: a transmission control protocol TCP address of the first node or an internet protocol IP address of the first node.

14. A communication apparatus, comprising a module or a unit configured to perform the method according to any one of claims 1 to 6, or a module or a unit configured to perform the method according to any one of claims 7 to 13.

15. A communication apparatus, comprising:
a processor, wherein the processor is coupled to a memory, and the processor is configured to execute a computer program or instructions stored in the memory, so that the communication apparatus performs the method according to any one of claims 1 to 6, or the communication apparatus performs the method according to any one of claims 7 to 13.

16. A chip, comprising a processor and a communication interface, wherein the communication interface is configured to receive to-be-processed information and/or data, and send the to-be-processed information and/or data to the processor, and the processor is configured to process the to-be-processed information and/or data, so that a communication apparatus in which the chip is installed performs the method according to any one of claims 1 to 6, or performs the method according to any one of claims 7 to 13.

17. A computer-readable storage medium, wherein the computer-readable storage medium stores computer instructions, and when the computer instructions are run on a computer, the method according to any one of claims 1 to 6 is implemented, or the method according to any one of claims 7 to 13 is implemented.

18. A computer program product, wherein the computer program product comprises computer program code, and when the computer program code is run on a computer, the method according to any one of claims 1 to 6 is implemented, or the method according to any one of claims 7 to 13 is implemented.

19. A wireless communication system, comprising a communication apparatus configured to perform the method according to any one of claims 1 to 6 and a communication apparatus configured to perform the method according to any one of claims 7 to 13.
